# EUROPEAN PATENT APPLICATION

(11) **EP 0 982 930 A2**
(43) Date of publication of application: **01.03.2000**
(21) Application number: 99306551.5
(22) Date of filing: 19.08.1999
(51) Int. Cl.: H04N 1/40

(54) **Method for embedding information and device for the same**

(30) Priority: 28.08.1998 JP 24287698
(71) Applicant: HITACHI, LTD., Chiyoda-ku, Tokyo (JP)
(72) Inventor: Uemura, Kazuya, Kashiwa-shi, Chiba-ken (JP); Shinoda, Takashi, Nagereyama-shi, Chiba-ken (JP); Kikuta, Atsushi, Kashiwa-shi, Chiba-ken (JP); Nagai, Yasuhiko, Bunkyo-ku, Tokyo (JP); Kumagai, Yukiko, Setagaya-ku, Tokyo (JP)
(74) Representative: Calderbank, Thomas Roger

(57) **Abstract**

A mark creating program 115e creates a mark in which addition information is embedded in a visually symbolic image data. A mark affixing program 115b affixes the mark to the contents of a web page that uniquely matches the information embedded in the mark, and this is registered in a web page database 120. A mark detecting program 115f detects marks contained in downloaded web pages. A mark displaying program 115g compares the information embedded in the mark with the information in the web page contents and displays the results of this confirmation of authenticity in the form of a visual mark that has been modified. A mark operating program 115h receives requests from the user to perform operations on the mark and uses a database inquiring program 115i to compare mark information so that results of further verification can be displayed.

## Description

The present invention relates to the distribution of multimedia data for computers. More specifically, the present invention relates to a technology used when a plurality of computers connected via a network sends and receives multimedia data.

With the growing popularity of the Internet in recent years, there has been a sharp increase in the number of people using the World Wide Web (WWW) system.

The WWW system allows free expression for all regardless of whether they are corporations or individuals. People across the world can view these expressions easily by viewing web pages.

While this ease of use, which allows the WWW system to be used freely by anyone, has been a factor in its explosive growth, this has also brought the following issues to the forefront.
(1) Various contents on web pages can be copied or altered without permission from the author.
(2) In the field of electronic commerce, unauthorized parties can obtain and abuse credit card numbers.
(3) A party can claim to be an official institution and distribute false information or libelous material.

Electronic watermarks and digital signatures are technologies that can be used to prevent these problems. In these technologies, contents and electronic documents are embedded with the date, information about the author or the administrator, information about the contents or electronic document itself, or the like (authentication information). When the contents or electronic documents are disseminated, this authentication information is extracted to detect alterations or unauthorized copying of the contents.

A system that implements this kind of technology was described in an article in the June 24, 1998 morning edition of the Nihon Keizai Shinbun. This article describes the initiation of a service that uses electronic watermarking to monitor unauthorized use of digital contents such as images and audio.

This kind of technology allows the use of specific systems to detect unauthorized copying and alterations of contents and electronic documents.

In the conventional technology described above, only prescribed registered users are able to apply watermarks containing authentication information. In the dissemination of data, authenticity can be guaranteed only for the contents and electronic documents in which watermarks have been applied by prescribed registered users.

In this technology, each time new content is created, a registered user must be notified and a request must be made to apply a watermark containing authentication information. This requires complicated administrative procedures and can also involve fees. Also, there may be a long delay between the request and the application of the watermark. Thus, this technology hampers the ease of use of the WWW system.

The object of the present invention is to overcome the problems described above and to provide a system for ensuring the authenticity of contents and electronic documents while not hampering the ease of use of the WWW system.

The present invention may then allow visual detection of the authenticity of information (information that can be recognized visually or aurally) indicated by multimedia data (a first multimedia data) such as image data, video data, or audio data, as well as authenticity of another multimedia data (a second multimedia data) containing this information. More specifically, the present invention may provide (1) visual confirmation indicating that the first multimedia data is unaltered and authentic; (2) confirmation of whether the administrator of the first multimedia data has consented to the inclusion of the first multimedia data in the second multimedia data; and (3) creation of the first multimedia data, which is then affixed to the second multimedia data.

The present invention may also provide a system for displaying the first multimedia data and the second multimedia data.

The present invention preferably takes a first multimedia data, which is data recognizable by the senses such as image data, video data, or audio data, and affixes it to another second multimedia data. When the second multimedia data is viewed, the visual design of the affixed first multimedia data is modified so that the user is given visual indication of various evaluations such as whether the first multimedia data is unaltered and authentic and whether the administrator of the first multimedia data consents to the inclusion of the first multimedia data in the second multimedia data. This allows the authenticity of contents and electronic documents to be guaranteed easily.

In order to implement these features, the present invention may provide the following systems: a system to easily and reliably embed into the first multimedia data information for detecting the alteration of data, information for uniquely specifying contents, and the like; a system for easily and reliably affixing the first multimedia data, which contains embedded information, into the second multimedia data; a system for safely detecting the first multimedia data containing embedded information out of the various types of multimedia data affixed to the second multimedia data; a system for performing various evaluations using the information embedded in the first multimedia data and reflecting the results of these evaluations in the display of the first multimedia data on the display device; and a system for receiving user requests for operations to be performed with regard to the first multimedia data and allowing the user to perform various selected operations.

In order to allow the necessary information to be embedded easily and reliably in the first multimedia data, the user may be prompted for entry of the first multimedia data and the necessary information. New or existing information is then entered and if entry of the necessary information is confirmed, the necessary information is then embedded in the first multimedia data. This first multimedia data in which the necessary information is embedded is also displayed so that the results of the embedding operation can be confirmed.

In order to allow the first multimedia data, in which information is embedded, to be easily and reliably affixed to the second multimedia data, information embedded in the first multimedia data to uniquely identify the second multimedia data may be used to search for, evaluate, and acquire, out of the set of all second multimedia data, the second multimedia data to which the first multimedia data is to be affixed. Also, information embedded in the first multimedia data is compared with the information contained in the second multimedia data, and the first multimedia data is affixed to the second multimedia data only if the information matches.

In order to allow the first multimedia data, in which information is embedded, to be detected from the different types of multimedia data affixed to the second multimedia data, the information in the second multimedia data specifying the first multimedia data may be used to detect the first multimedia data, and the first multimedia data from which embedded information can be obtained is selected.

In order to use the information embedded in the first multimedia data to perform various evaluations so that the displayed design of the first multimedia data can reflect the results of the evaluations on the display device, a program may be provided to extract the embedded information from the first multimedia data and compare this information with other information. Based on the results of this operation, the first multimedia data can be displayed in different ways such as with a border, flashing on and off, or with a descriptive string overlaying the image.

In order to allow the user to request operations to be performed with regard to the first multimedia data displayed on the display device and to perform various selected operations, an operation may check for user operations performed in the first multimedia data region. The operations that can be performed may then be displayed to the user as a menu based on the embedded information.

In the drawings

Fig. 1 is a drawing showing the internal structure of a mark authoring device 100 in which the first embodiment is implemented.

Fig. 2 is a drawing for the purpose of describing the data structure and contents of mark addition information.

Fig. 3 is a drawing for the purpose of describing the data structure and contents of the mark management database 130 in Fig. 1.

Fig. 4 is a drawing for the purpose of describing the operations performed by a mark creating program 115e shown in Fig. 1.

Fig. 5 is a drawing for the purpose of describing a sample screen for the entry of new information from the mark creating program shown in Fig. 4.

Fig. 6 is a drawing for the purpose of describing a sample screen for the entry of new and existing information from the mark creating program shown in Fig. 4.

Fig. 7 is a drawing for the purpose of describing the operations performed by a mark affixing program 115b shown in Fig. 1.

Fig. 8 is a drawing for the purpose of describing a sample mark affixing description template and mark affixing description information shown in Fig. 7.

Fig. 9 is a drawing for the purpose of describing the operations performed by the mark detecting program 115f shown in Fig. 1.

Fig. 10 is a drawing for the purpose of describing the operations performed by the mark displaying program 115g shown in Fig. 1.

Fig. 11 is a drawing for the purpose of describing examples of how marks are displayed by the mark displaying program shown in Fig. 10.

Fig. 12 is a drawing for the purpose of describing sample mark displays from the mark displaying program shown in Fig. 10.

Fig. 13 is a drawing for the purpose of describing the operations performed by the mark operating program 115h shown in Fig. 1.

Fig. 14 is a drawing for the purpose of describing the operations performed by the database inquiring program 115i shown in Fig. 1.

Fig. 15 is a drawing for the purpose of describing sample mark displays from the inquiry operations shown in Fig. 13 and Fig. 14.

Fig. 16 is a drawing showing the structure of a system in which a second embodiment of the present invention is implemented.

Fig. 17 is a drawing showing the internal structure of a client terminal 1601 shown in Fig. 16.

Fig. 18 is a drawing showing the internal structure of the client terminal 1601 in which the third embodiment of the present invention is implemented.

The following is a description of the embodiments of the present invention with references to the figures.

In the figures referred to in the description below, elements having like numerals indicate like elements. The present invention is not restricted to these embodiments.

### (First embodiment)

The following is a description of a first embodiment of the present invention.

In this first embodiment, a visually symbolic image data (mark image data) serves as the multimedia data (a first multimedia data) that can be visually or aurally recognized, e.g., image data, video data, or, audio data. Hypertext Markup Language (HTML) data (web page) for the WWW system serves as another multimedia data (a second multimedia data) that will contain the first multimedia data. Information that uniquely identifies a web page and information used to perform queries with regard to the first multimedia data serves as the information embedded in the first multimedia data (mark addition information). The mark addition information is embedded in the mark image data to form mark data, which is affixed to the web page of the mark data. When the web page is displayed, the authenticity of the web page can be visually confirmed through the mark data display shown when the web page is displayed as well as through operations performed on the mark data. In the first embodiment, these elements and operations are implemented in a single device.

However, in the first embodiment, the first multimedia data can also be video data, audio data, or text data rather than image data. Also, the second multimedia data can be a document data or a graphics data rather than a web page.

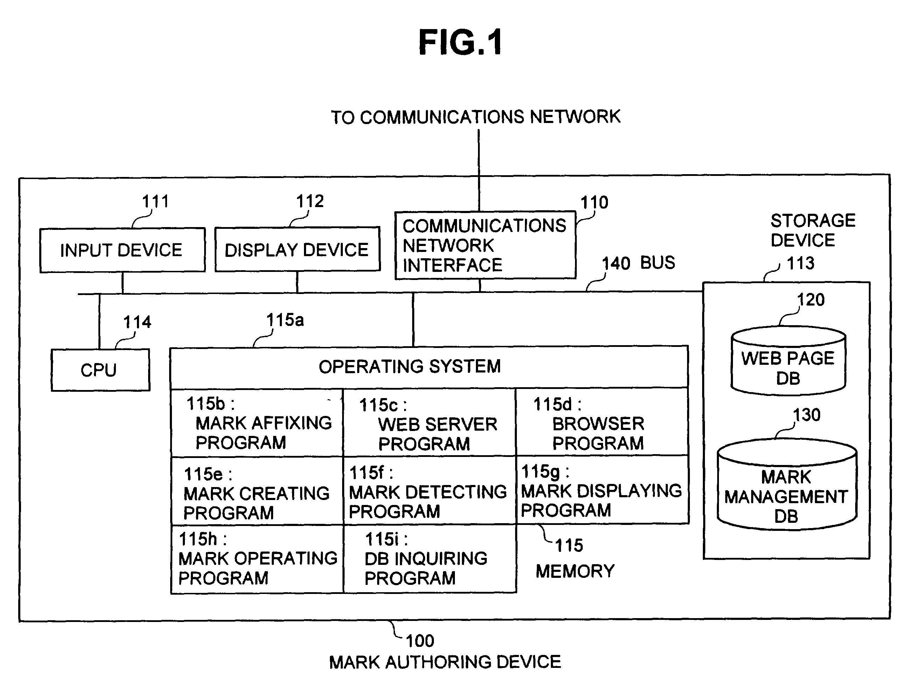

Fig. 1 shows the internal structure of a mark authoring device 100 according to the first embodiment.

In the mark authoring device 100, a bus 140 is used to connect: a communications network interface 110 allowing connection to a communications network; an input device 111 such as a keyboard or mouse; a display device 112 such as a monitor; a storage device 113 providing permanent storage of programs and data; a central processing unit (CPU) 114 for performing operations; and a temporary storage device (memory) 115 for temporarily storing programs and data.

The storage device 113 stores a web page database 120 and a mark management database 130.

The web page database 120 stores web pages.

The mark management database 130 stores all or part of the mark addition information as well as information relating to mark data such as the date the mark data was created.

The memory 115 stores: an operating system 115a; a mark affixing program 115b; a web server program 115c; a browser program 115d; a mark creating program 115e; a mark detecting program 115f; a mark displaying program 115g; a mark operating program 115h; and a database inquiring program 115i.

The operating system 115a implements functions such as file management, process management, and device management to provide overall control over the mark authoring device 100.

The mark creating program 115e requests the user for input of mark image data and mark addition data via the input/output devices. This data is obtained, and the mark addition data is embedded in the mark image data. Information concerning the created mark data is registered in the mark management database.

The mark affixing program 115b uses the mark addition information to find a specific web page from the web pages stored in the web page database 120. The mark data is automatically affixed to the web page and the mark data and the web page are stored in the web page database 120.

In response to access from the browser program 115d, the web server program 115c sends the appropriate web page stored in the web page database 120 to the browser program 115d.

The browser program 115d requests the web server program 115c to send web pages and displays the retrieved web page on the display device 112.

The mark detecting program 115f checks the contents of the web page sent to the browser program 115d from the web server program 115c. The mark data on the web page is detected and sent to the mark displaying program 115g.

The mark displaying program 115g extracts mark addition information from the mark data detected by the mark detecting program 115f and displays the mark data on the display device 112.

The mark operating program 115h detects user operations on the mark data displayed on the display device 112 and performs the operations selected by the user.

The database inquiring program 115i is started up by the mark operating program 115h and compares the mark data to the information in the mark management database 130. The results are displayed on the display device 112.

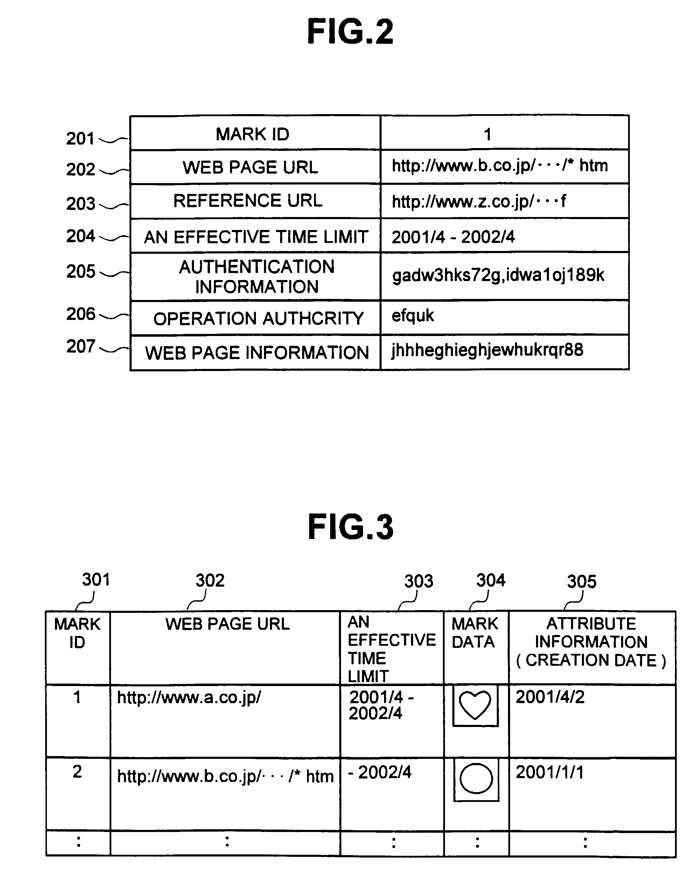

Fig. 2 is a drawing showing the data structure and sample contents of the mark addition information.

The mark addition information includes: a mark ID 201; a web page URL 202; a reference URL 203; an effective time limit 204; an authentication information 205; an operation authority 206; and a web page information 207.

The mark ID 201 is a code used to identify each mark data.

The web page URL 202 is an address used to specify a web page on which the mark data is to be affixed.

The reference URL 203 is an address used to specify a mark management database.

The effective time limit 204 is a code used to specify a time period for which the mark data is valid.

The authentication information 205 is a code such as an electronic signature used to authenticate the creator of the mark data.

The operation authority 206 is a code such as a password or a public key used to set up operation authority for displaying and updating mark data.

The web page information 207 is a code such as a hash value of a web page used to specify a web page.

The structure of the mark addition information changes depending on the type of mark data created. In Fig. 2, if the mark data does not have an effective time limit or if the mark authoring device 100 creates just one mark data, the corresponding fields, e.g., the effective time limit, do not need to be included.

Fig. 3 is a drawing showing the data structure and sample data stored in the mark management database 130.

Each record in the mark management database 130 includes: a mark ID 301; a web page URL 302; an effective time limit 303; a mark data 304; and an attribute information (date/time of creation) 305.

The mark ID 301 is an identifier for each mark data.

The web page URL 302 is the Universal Resource Locator (URL) of the web page onto which the mark data is to be affixed.

The effective time limit 303 is a code used to specify a period in which the mark data is valid.

The mark data 304 is the mark data itself.

The attribute information (date of creation) 305 is a code used to specify the date on which the mark data was created.

When the mark data is created, the information needed to manage mark data is registered by the mark creating program. This information is used when the database inquiring program 115i makes a mark data query. Referring to Fig. 3, if effective time limits are not used or if the mark authoring device 100 creates only one mark data, there is no need to manage the corresponding fields, e.g., the effective time limit field.

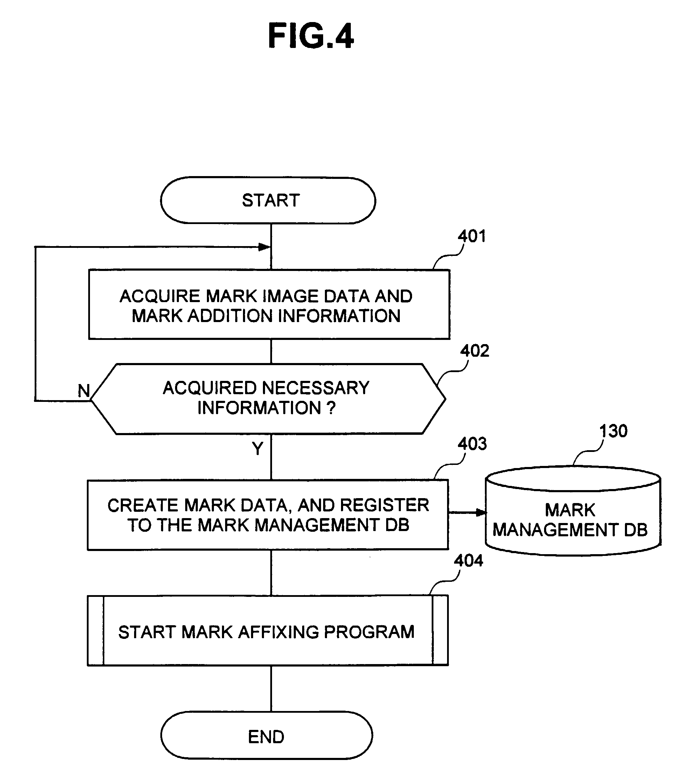

Fig. 4 shows the flow of operations performed by the mark creating program.

This program is started up in response to user input.

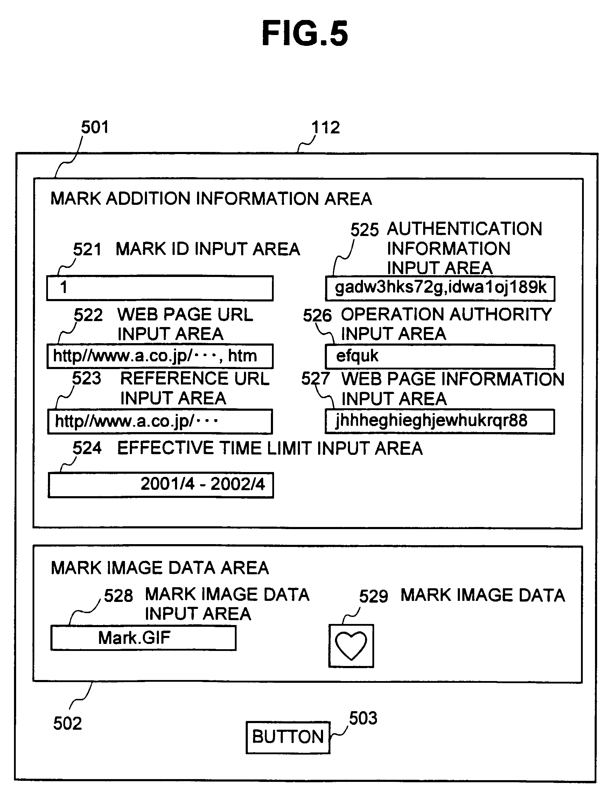

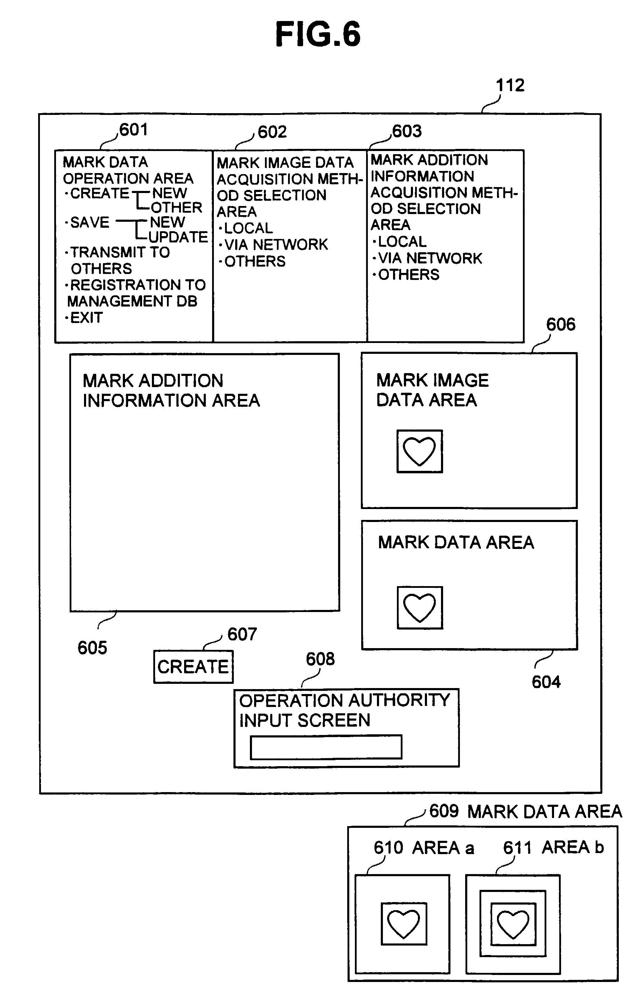

When the program starts up, it first requests and gets the mark image data and the mark addition information from the user via the input/output devices (step 401). If existing mark data is to be used and an operation authority code is already set up in the mark addition information of the existing mark data, the user is requested to enter the operation authority code. The obtained code is compared with the operation authority code in the mark addition information, and the program terminates here if the two do not match. The order in which the mark image data and the mark addition information are acquired is not important. The sample screens shown in Fig. 5 and Fig. 6 for user entry of the information needed for creating mark data will be described later.

Next, step 402 checks to see that the mark image and the mark addition information shown in Fig. 2 needed for creation of mark data have been acquired correctly. If the necessary information has been acquired, the mark addition information is embedded in the mark image data to create the mark data. The information needed for mark data management is registered in the mark management database 130 (step 403). The mark addition information varies according to the type of mark data created. Therefore, the checking of the mark addition information and the input screen is different for each type of mark data.

Next, the mark affixing program is started up and the mark data and a web page URL is sent to the mark affixing program (step 404). It would also be possible to have the mark affixing program already running at this point.

Fig. 5 is a sample screen that prompts the user for information needed for mark creation and that handles the embedding of the mark addition information in the mark image data. The mark creating program displays this screen on the display device 112. This screen includes: an area 501 for user entry of mark addition information; an area 502 for user entry of mark image data; and a button 503 for the user to indicate that the mark addition information is to be embedded in the mark image data.

The mark addition information area 501 includes: a mark ID input area 521; a web page URL input area 522; a reference URL input area 523; an effective time limit input area 524; an authentication information input area 525; an operation authority input area 526; and a web page information input area 527.

The user enters the mark addition information in the input areas of the mark addition information area 501 using the input device 111.

However, the present invention is not restricted to this method. In order to eliminate extra user entry work, data stored in a storage device can be used, or the mark creating program can provide the information. For example, if the user enters the same information each time new mark data is created, the initial settings (information containing reference URLs and the like) can be stored in a storage device. The mark creating program can then read the initial settings from the storage device so that the reference URL is entered in the reference URL input area 523. Also, the mark ID data in the mark management database can be examined so that an unused mark ID can be entered in the mark ID input area 521.

The following are sample user entries that can be entered in the web page URL input area 522.
Sample entry 1: http://www.a.co.jp/aaa/aa/a.htm
Sample entry 2: http://www.a.co.jp/
Sample entry 3: http://www.a.co.jp/aaa/
Sample entry 4: http://www.a.co.jp/aaa/aa/a.html; http://www.b.co.jp/
Sample entry 5: *

In the sample entry 1, there is only one web page at the address indicated by the web page URL. Thus, a one-to-one correspondence is specified between the web page and the mark data. In the sample entry 2, the web page URL is a web site URL that allows all the web pages below the address to be specified. The sample entry 3 allows all the web pages below a single directory within a web site (a directory named aaa) to be specified. In the sample entry 4, a plurality of web pages can be specified by indicating the URLs from the sample entries 1, 2, 3 separated by semicolons. In the sample entry 5, a character such as "*" that does not indicate an address is defined as a special character so that all web pages are specified if an entry contains a "*" (for example, sample entry 5 can allow the mark data to be used on any web page while also displaying information about the creator of the mark data).

Thus, the user can freely set up a range of web pages to which the mark data can be affixed. Characters such as ";" and "*" in the sample entries 4 and 5 can be changed to other characters.

The mark image data area 502 includes a mark image data input area 528. The user enters the filename in which the mark image data is saved into the mark image data input area 528 using the input device 111. The mark creating program reads the specified mark image data filename from a storage device and displays the mark image data 529 in the mark image data area 502. This provides the user with visual confirmation of the mark image data 529.

The button 503 is inactive if all the necessary input areas are not filled out or if there is an error in the entered information (for example, if Chinese characters are entered in the web page URL input area 522 or if the effective time limit input area 524 contains a date earlier than the date of creation). Otherwise, the button 503 can be pressed. This allows the user to know if the necessary information has not been entered when creating the mark data while also preventing creation of mark data with insufficient or erroneous information. Rather than using this method, it would also be possible to allow the user to press the button 503 even if insufficient or erroneous information has been entered. Then, a screen can be displayed to show the user the input areas having missing or erroneous information has been entered. When the button 503 is pressed, the mark creating program generates mark data based on the information from the mark addition information area 501 and the mark image data area 502. The information necessary for mark management is registered in a prescribed mark management database. Then, the mark affixing program is started up and the mark data and the web page URL are passed on.

In the above description, mark data is generated with a one-to-one correspondence between the mark addition information area 501 and the mark image data area 502. However, other methods can also be used. For example, multiple mark addition information areas 501 can be displayed on the display device, and one mark image data area 502 can be displayed. When the user presses the button 503, the information from the multiple mark addition information areas 501 can be embedded in the mark image data 529, thus allowing multiple sets of mark data to be generated in one operation. The reverse is also possible.

The above description presented one sample information input screen. Depending on the type of mark data to be created, the fields displayed in the mark addition information area 501 can be changed.

Fig. 6 shows a sample screen in which new mark data can be created using existing mark data. The following is a description of the elements of this screen. The mark creating program displays this screen on the display device 112. This screen includes: an area 601 prompting the user to select a mark data operation; an area 602 prompting the user to select an input data source for the mark image data; an area 603 prompting the user to select an input data source for mark addition information; an area 604 showing the mark data to the user; an area 605 prompting the user to enter for mark addition information; an area 606 prompting the user to enter mark image data; a button 607 allowing the user to indicate that the mark addition information is to be embedded in the mark image data; and an input screen 608 prompting the user to enter an operation authority code.

The mark data operation area 601 shows the user the file operations that can be performed including: creating new mark data of various types; creating mark data from existing mark data of various types; saving/overwriting mark data to a file; transmitting mark data to a third party via a network; specifying a mark management database in which information for managing mark data is to be registered; and exiting the program.

The mark image data acquisition method selection area 602 shows the user the available existing files containing mark image data such as files available within the device being used and files available via a network.

The mark addition information acquisition method selection area 603 shows the user the available existing files containing mark addition information such as files available within the device being used and files available via a network.

The mark data area 604 displays the mark data. This provides the user with visual confirmation of the mark data. It would also be possible, as shown in the mark data area 609, to display an area a 610 and an area b 611. The area a 610 shows what is actually displayed by the mark displaying program when the mark data is affixed to a specified web page. The area b 611 shows what is actually displayed by the mark displaying program when the mark data is affixed to a web page that was not specified. The mark data displayed in the area a 610 is based on a comparison between the web page URL entered in the mark addition information area 605 and a web page URL extracted from the created mark data. The mark data displayed in the area b 611 is based on a comparison between the web page URL extracted from the created mark data and the web page URL entered in the mark addition information area 605 with extraneous information appended (e.g., the single character "a"). This provides the user with visual confirmation of the mark data when it is actually affixed to a specified web page and an unspecified web page. Rather than using this method, it would also be possible to have a plurality of areas set up in the mark data area 609 with sample displays based on other comparisons such as of effective time limits.

In the sample screen described above, the information stored in an existing file selected by the user is displayed in the mark addition information area 605 and the mark image data area 606. The user can change the displayed information, and can view the mark data generated in response to a mouse click or the like on the create button 607. This allows mark data to be created easily and reliably.

When existing mark data is to be used, the operation authority input screen 608 is displayed and the user is prompted for an operation authority code. The mark creating program extracts the operation authority code set up in the existing mark addition information and compares this with the operation authority code entered by the user. If these match, the mark data and the mark addition information are displayed, and the mark data management database can be updated. Rather than using this method, it would also be possible to use the operation authority code when the mark management database is to be updated. For example, when the create button 607 is pressed, the operation authority input screen 608 can be displayed and updates to the mark management database can be blocked unless there is a match with the entered operation authority code. In this case, two types of operation authority codes--one for displaying and one for registering--are set up. Of course, to prevent the operation authority code from being disclosed, the operation authority code is not displayed in the mark addition information area 605.

In this screen, the mark addition information area 605 and the mark addition information area 501 from Fig. 5, the mark image data area 606 and the mark image data area 502 from Fig. 5, the create button 607 and the button 503 from Fig. 5 are all set up as identical areas and provide the same functions.

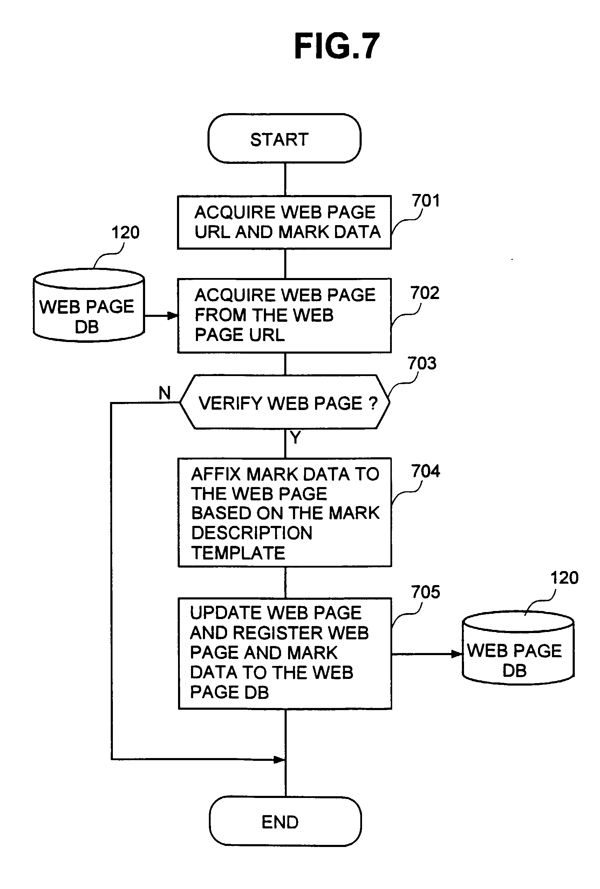

Fig. 7 is a flowchart of the operations performed by the mark affixing program.

This program is activated from the mark creating program.

The program first acquires the web page URL and the mark data passed on by the mark creating program (step 701). It would also be possible to acquire the web page URL by extracting the mark addition information from the mark data.

Next, the web page database is searched to find a web page matching the web page URL, and this web page is acquired (step 702).

Next, the acquired web page and the mark data are verified (step 703). If the web page was acquired from the web page database based on the web page URL, the web page URL information should match the web page URL information from the mark addition information, in order to allow the mark data to be affixed to the web page. It would also be possible to provide further reliability in the verification of the relationship between the web page and the mark data by comparing a hash value of the acquired web page with the web page information extracted from the mark addition information. If the information does not match, the mark data should not be affixed to the web page and the program is terminated.

Next, if the verification results are positive, the web page is put in an editable state and information allowing mark data to be affixed is added to the web page using a mark affixing description template stored by this program (step 704). Then, the web page is updated and the web page and the mark data are registered in the web page database (step 705).

The above was an example of the operations performed for affixing marks, but other implementations are also possible.

For example, if the user knows the mark data and the web page to which the mark data is to be affixed, the user can specify to this program the mark data and the web page to which the mark data is to be affixed. This is quicker and imposes less of a load compared to having the mark affixing program acquire the web page by searching the web page database using the web page URL. However, since user operations are used to specify the web page, an incorrect web page may be specified. Thus, this program can store information used by the user to specify web pages in the web page data base (server addresses, directories within the server, filenames, and the like), and this information can be compared with the web page URL in order to prevent mark data from being affixed to the wrong web page.

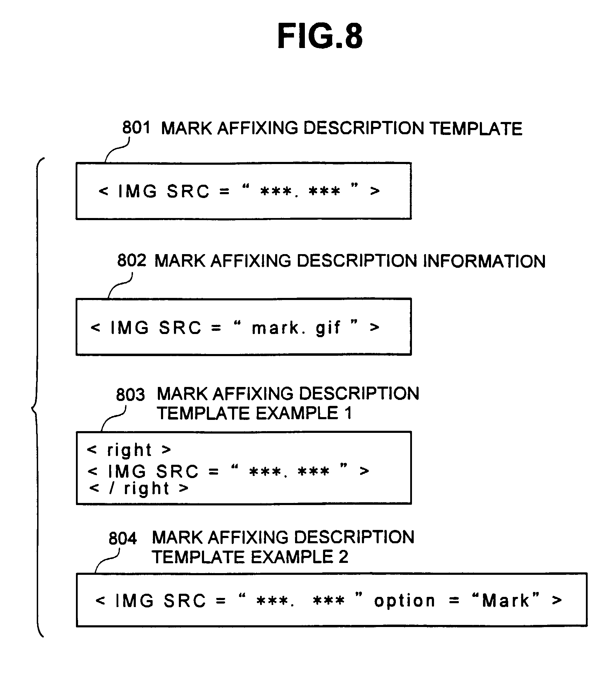

Fig. 8 shows the mark affixing description template and the mark affixing description information.

The mark affixing description template is a file containing HTML code linking the web page to the mark data. A basic mark affixing description template 801 is shown. The template contains HTML notation that places an image at a specified position within a document. The mark affixing program reads the code contained in the mark affixing description template and adds attribute information (a filename or the like) specifying the mark data obtained in step 701. A resulting mark affixing description information 802 is added at a specific position (e.g., between line X and line Y, counting from the first line) in the HTML code of the web page. The location at which the mark data is affixed can be set through default settings or the like, and the affixing can be performed in different ways by adding standard HTML to the mark affixing description template. For example, alignment for the mark data can be added as shown in the mark affixing description template example 1 (803). HTML tags specific to mark data, such as 'option="Mark"' can be added at the end of the HTML tag such as in the mark affixing description template example 2 (804).

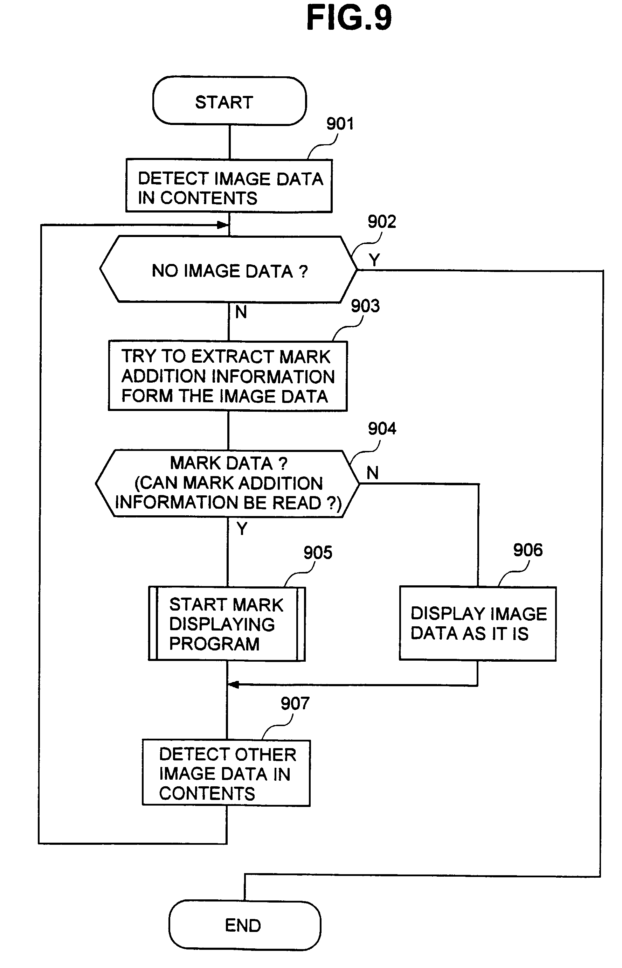

Fig. 9 is a flowchart of the operations performed by the mark detecting program.

This program starts up when a browser program loads data from a web page to be displayed.

When the program starts up, image data in the page content is detected (step 901). The detection of image data can be performed, for example, by searching the HTML code of the web page for tags indicating inclusion of image data.

If the page contents do not contain image data, this program terminates (step 902).

If image data is detected in the page contents, an attempt is made at extracting mark addition information from the image data (step 903), and the results are checked to see if mark data can be found (step 904). This can be performed by extracting mark addition information from the image data and assuming that the data is mark data if addition information can be properly extracted. Otherwise, the data is assumed to be image data.

If the image data is determined to be mark data, the mark displaying program is started up (step 905). If not, the image data is displayed directly (step 906).

Next, other image data in the page contents is detected (step 907), and step 902 through step 907 are repeated until all image data in the page has been processed.

The above description presented one example of how mark detection can be performed, and other methods can be used as well.

For example, the mark data can use a data format that is different from standard image data formats. The browser can be set up so that if mark data is found on the web page, the mark displaying program is started up. This way, the browser can look at the data format used in the web page and use its internal image displaying feature for standard image data and start up the mark displaying program for mark data, thus eliminating the need for a mark detecting program. In this case, the extraction of addition information can be performed only if image data is determined to be mark data.

If mark data is represented using a standard image data format, the notation used to affix the mark data in the HTML code can be different from the notation used for standard image data (for example, an image can be assumed to be mark data if a notation specific to mark data such as 'option="Mark"' is appended to an HTML tag). This allows mark data to be distinguished from other types of image data before an attempt is made to extract addition information.

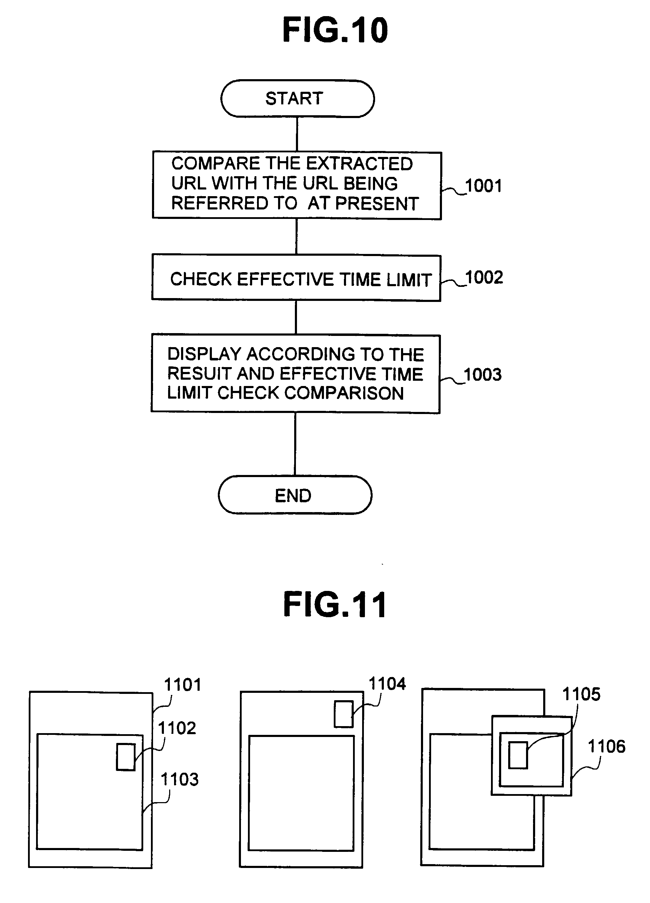

Fig. 10 is a flowchart showing the operations performed by the mark displaying program.

This program is activated by the mark detecting program for each mark data found on a web page. Thus, if a plurality of mark data is present in a web page, a plurality of mark data would be displayed properly on the display device.

When this program is activated, the URL information extracted from the mark data at step 903 is compared with the URL of the page currently being viewed (step 1001). As described above, a hash value of the contents or the like can be used instead of the URL to identify the contents.

Next, the effective time limit information extracted at step 903 is used to determine if the mark data has expired or not (step 1002).

Then, mark data corresponding to the comparison result and the effective time limit check is displayed in the mark data display area (step 1003). This allows the viewer to look at the displayed image to determine if the mark data is from an original or an unauthorized copy or if the effective time limit has expired.

The sequence of operations performed at step 1001 and step 1002 can be reversed. It would also be possible to skip display processing and to instead display the mark image data directly on the display device.

Fig. 11 shows examples of mark data display positions resulting from the mark displaying program.

An image 1102 is the result of displaying mark data as standard image data in the contents display area 1103 of the browser window 1101.

However, it would also be possible to allow the mark data to be easily distinguished from standard image data by displaying the mark data outside the contents display area of the browser, as in image 1104. Or, the mark data can be displayed by opening up a new window 1106 separate from the browser window, as in image 1105.

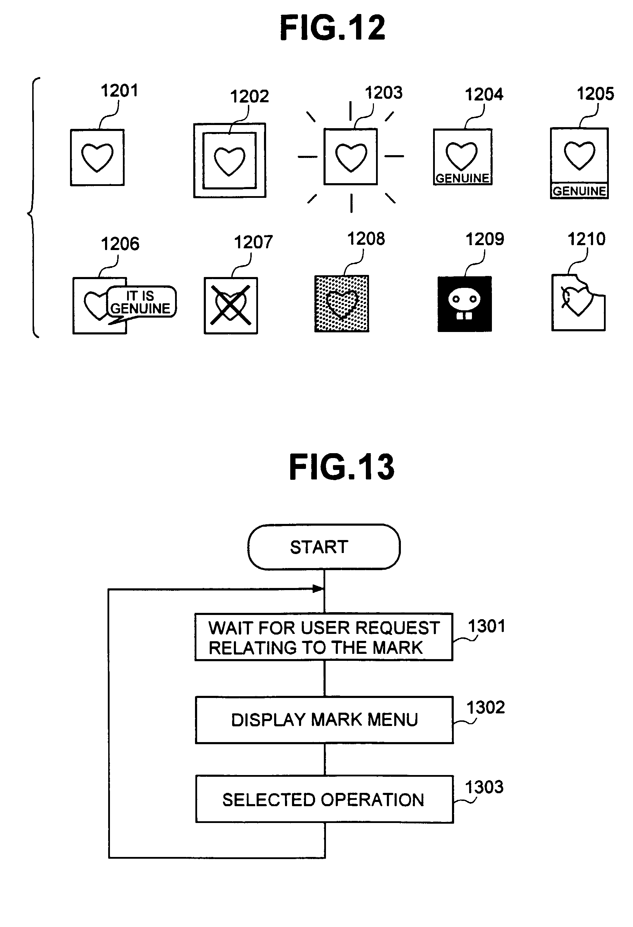

Fig. 12 shows examples of how the mark displaying program can modify the mark data on the display.

An image 1201 is the mark data displayed with no modifications.

In order to allow standard image data and mark data to be easily distinguished visually, it would be possible to display the mark image in different ways such as by displaying a frame around mark data images (image 1202) or by having the mark data image flash on and off (image 1203).

Also, modifications can be made in the display of marked images to indicate comparison results and effective time limit checking through such means as overlaying a string on the image such as "Genuine" (image 1204), displaying a string outside of the image area (image 1205), or displaying the string in a geometric shape such as a word bubble (image 1206).

Instead of indicating validity through a string, it would also be possible to overlay graphics indicating validity (such as a circle or an X) (image 1207), to change colors based on image validity (image 1208), to display an easily recognizable image (such as a skull) (image 1209), or to modify the mark data in a manner that allows the user to easily recognize the meaning (have part of the image torn away) (image 1210).

Other displaying methods not described above can also be used. Also, it would be possible to use a displaying method described above for a fixed period of time, after which the original image is displayed normally.

Fig. 13 is a flowchart showing the operations performed by the mark operating program.

This program is activated when the mark displaying program finishes. Since the mark operating program is activated separately for each mark data in the web page, the user can perform operations for each of the mark data displayed on the display device.

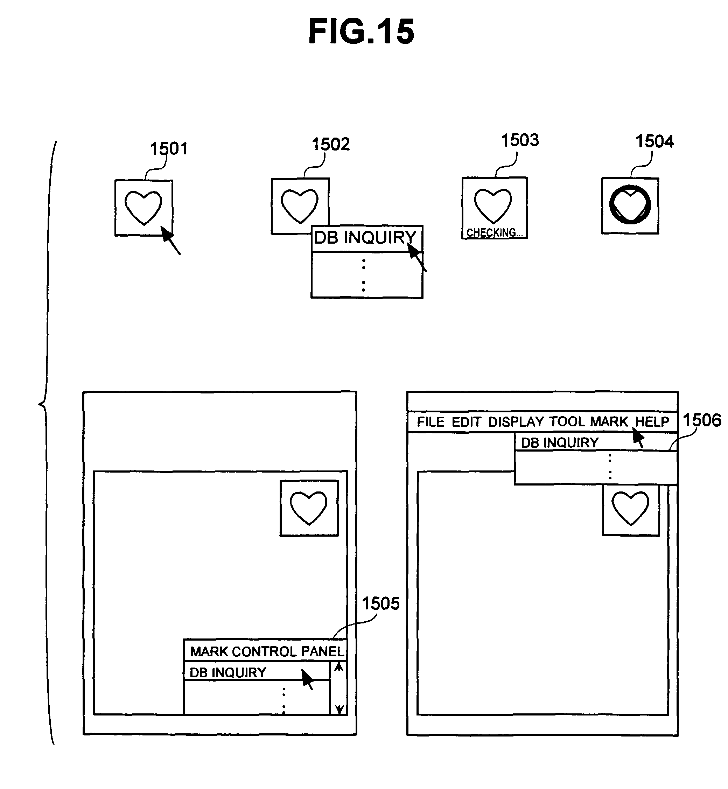

When this program starts up, it first waits for the user to request an operation to be performed with regard to the mark (step 1301). The user can make a request to perform an operation with regard to the mark by moving the mouse cursor over the mark data and clicking, as shown in image 1501 in Fig. 15. However, other methods can be used instead. For example, a prescribed key on the keyboard can be pressed.

When the user makes a request to perform an operation on the mark, an operations menu is displayed to allow the user to select an operation (step 1302). For example, as shown in image 1502, a menu showing a list can be displayed near the display area of the mark data. Other methods can be used instead, such as displaying an operations panel in a prescribed area of the browser window (image 1505) or by adding a menu for performing mark operations to the browser menu itself (image 1506).

When the user selects an operation from the menu, the mark operating program starts up a program corresponding to the selected operation (step 1303). Once the execution of this program is completed, the mark operating program waits for another request by the user.

In the description below, the program activated by the mark operating program will be a database inquiring program that checks the validity of the mark data by getting the URL to which the mark data is to be affixed from the mark management database rather than from the mark addition information.

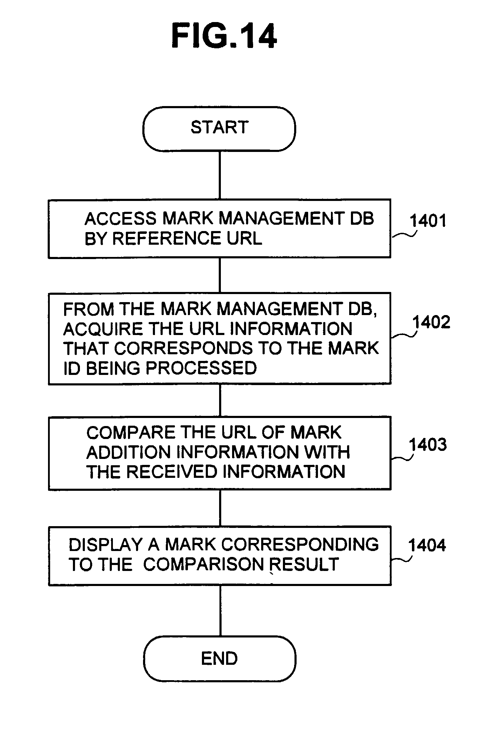

Fig. 14 shows a flowchart of the operations performed by the database inquiring program.

This program is started up when the user selects the database inquiry operation from the operations menu.

First, the mark management database is accessed using the reference URL in the mark addition information (step 1401).

Next, the URL corresponding to the ID of the mark data being processed is obtained (step 1402). During this operation, a screen display, as shown in the image 1503, can be provided to indicate that data is being accessed.

Next, the URL obtained from the mark management database is compared with the URL that is currently being viewed by the user (step 1403), and a display operation is performed based on the results of this comparison (step 1404, image 1504). Of course, as shown in Fig. 12, various rendering operations can be applied to this display.

Once the rendering is completed, this program is terminated and control returns to step 1301 of the mark operating program.

With this program, the web page information specifying the contents, which is necessary for determining the validity of the mark data, can be obtained not only from the mark addition information but also from a source external to the mark data (e.g., from the mark management database or a specific file). Thus, when the mark displaying program displays the mark data, information obtained in this manner from a source external to the mark data can be used.

### (Second embodiment)

With the mark authoring device 100 described in the first embodiment, mark data can be created, affixed, displayed, processed, and checked. The second embodiment provides client terminals that can perform limited displaying and processing of marks using the programs (functions) in the device.

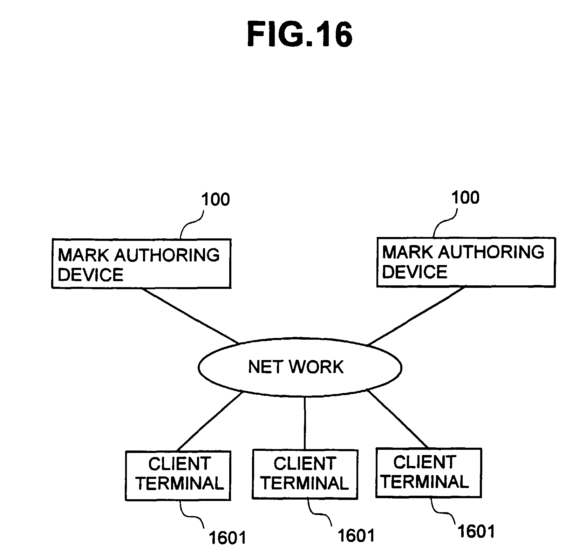

Fig. 16 is a drawing showing the structure of the system used in the second embodiment. The mark authoring device 100 provides information over a network such as the Internet. The mark authoring device 100 is connected to a plurality of client terminals 1601 which can access information provided by the mark authoring device 100.

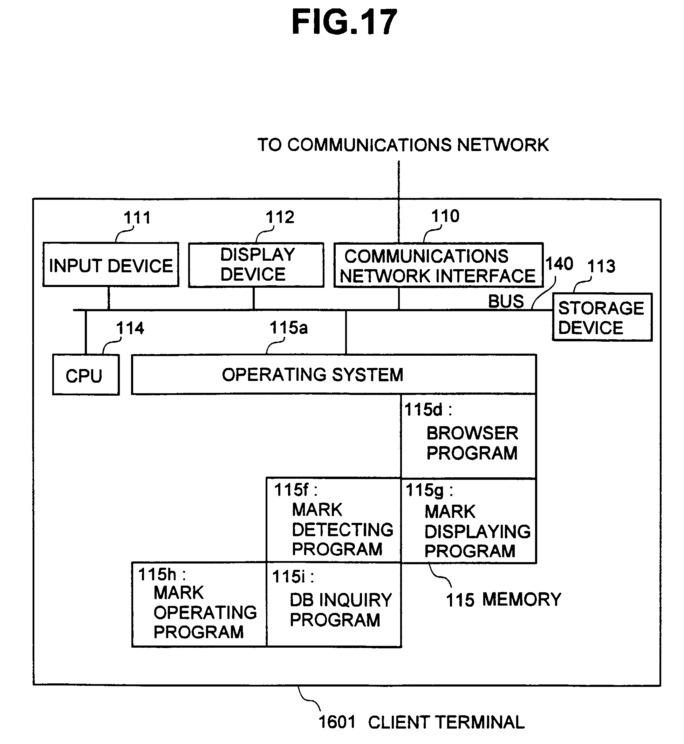

Fig. 17 is a drawing showing the internal structure of the client terminal 1601.

The elements used in the client terminal 1601 are the same as the corresponding elements from the mark authoring device 100 shown in Fig. 1. To implement the second embodiment, the client terminals 1601 require the mark detecting program 115f, the mark displaying program 115g, the mark operating program 115h, and the database inquiring program 115i. If the client terminals 1601 are not installed with these programs, these programs must be stored in a storage medium such as floppy disks and installed on the client terminal 1601. Alternatively, these programs can be executed via the network.

When a marked web page is viewed from the client terminal 1601, the authenticity of the web page can be determined simply by viewing the displayed mark, as shown in Fig. 9 through Fig. 15. Also, operations can be performed on the displayed mark in order to have the mark authoring device 100 query the mark management database 130, thus providing further confirmation of the mark.

### (Third embodiment)

In addition to what is described in the second embodiment, the third embodiment further provides the client terminal 1601 with a program (function) for receiving mark data created by the mark authoring device 100 and affixing the mark to a web page.

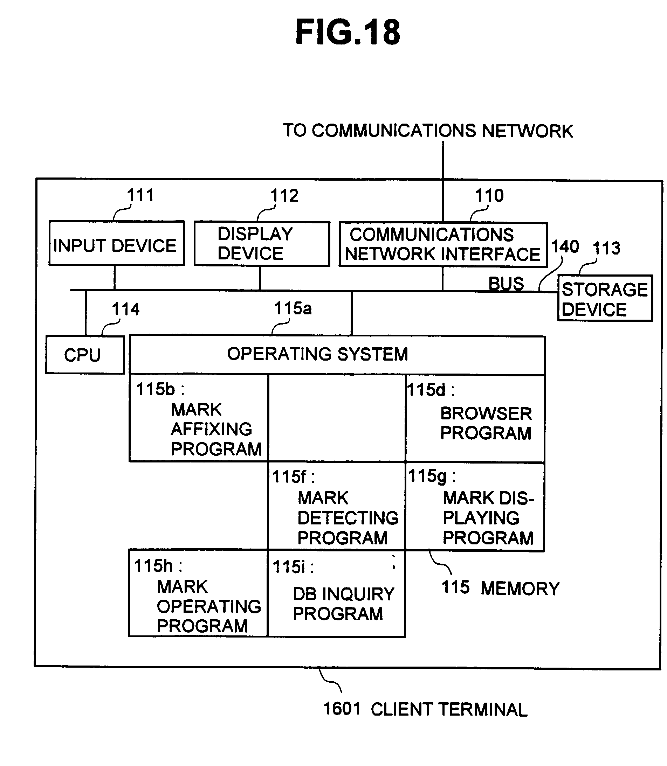

Fig. 18 shows the internal structure of the client terminal 1601 from the third embodiment.

The internal structure of the client terminal program 1601 is the same as the corresponding internal structure shown in Fig. 17, with the addition of the mark affixing program 115b to the memory 115.

In the third embodiment, the client terminal 1601 can request the mark authoring device 100 to create a mark and the resulting mark data can be affixed to a specified web page. For example, the input screen from Fig. 5 is made available by the mark authoring device 100 via the network and is displayed on the client terminal 1601. At the client terminal, the necessary information is entered and is sent back to the mark authoring device 100. The mark authoring device 100 uses the received information, checks this information, and creates mark data. This mark data is then sent to the mark affixing program 115b of the client terminal 1601, which then affixes the mark data to the web page. As in the second embodiment, the user can see and perform operations on the mark data in the web page in order to confirm the authenticity of the web page.

The present invention is not restricted to what is described above, and various modifications may be effected by combining the programs in different ways.

As described above, the present invention allows various code data to be easily and reliably embedded in multimedia data (audio or video data) . This can then be affixed easily and reliably to other multimedia data. Indications of the authenticity of the multimedia data can be displayed on a display device without requiring special operations or procedures. Thus, it is possible to provide a system that easily and reliably guarantees the authenticity of multimedia data.

## Claims

1. A method for embedding information comprising the steps of:
entering multimedia data containing at least one of character data, static image data, video data, or audio data;
entering code information corresponding to contents containing said multimedia data; and
creating multimedia data containing embedded information by embedding said code information into said multimedia data if said entry of code information is confirmed.

2. A method for embedding information as described in claim 1 wherein said entered information includes either code information identical to said code information embedded in said multimedia data or a location of a third party containing a section of said code information.

3. A method for embedding information as described in claim 1 wherein said code information comprises code information specifying a plurality of contents all at once.

4. A method for embedding information as described in claim 1 wherein said entered information contains information relating to operating authority for said embedded information in said multimedia data.

5. A method for embedding information as described in claim 1 wherein said multimedia data can be recognized through the senses.

6. A method for affixing multimedia data comprising the steps of:
outputting location information of contents to which said multimedia data is affixed based on code information embedded in said multimedia data referencing contents; and
affixing a mark corresponding to said contents.

7. A method for displaying multimedia data containing embedded information comprising the steps of:
performing a comparison, when said contents containing multimedia data is displayed on a screen, between a code information embedded in said multimedia data referencing contents and a location information of contents containing said multimedia data; and
displaying a result of said comparison via said multimedia data.

8. A method for displaying multimedia data containing embedded information comprising the steps of:
when said contents containing multimedia data is displayed on a screen, extracting a reference destination contained in code information embedded in said multimedia data;
transmitting a reference message to said reference destination based on said extracted location information; and
displaying received reference results via said multimedia data.

9. A device for embedding information comprising:
means for entering multimedia data containing at least one of character data, static image data, video data, or audio data and code information corresponding to contents containing said multimedia data; and
means for creating multimedia data containing embedded information by embedding said code information in said multimedia data if entry of code information is confirmed.

10. A method for embedding information as described in claim 9 wherein said multimedia data can be recognized through the senses.

11. A program product for registering embedded information comprising:
a function for entering mark data to be displayed and information to be embedded in a mark;
a function for creating data relating to said mark based on said entered information; and
a function for registering data related to said created mark into storage means.

12. A program product for managing embedding of information comprising:
a function for entering information related to a mark and access information for contents information in which said mark is to be embedded;
a function for entering information related to said contents based on said access information;
a function for verifying, based on said information related to said contents, whether said mark is to be embedded in said contents;
a function for creating data relating to said mark while linking information to be embedded in said mark with information related to said mark if said verification indicates said mark is to be embedded in said contents; and
a function for storing information related to said contents and information relating to said mark in storage means.
